# EUROPÄISCHE PATENTSCHRIFT

(11) **EP 1 596 178 B1**
(45) Veröffentlichungstag und Bekanntmachung des Hinweises auf die Patenterteilung: **11.07.2007**
(21) Anmeldenummer: 05002238.3
(22) Anmeldetag: 03.02.2005
(51) Int. Cl.: G01L 19/06, F16K 17/04

(54) **Manometeranordnung mit integriertem Druckbegrenzungsventil**
Manometer system with integrated pressure relief valve
Dispositif manomètre avec soupape de limitation de pression intégrée

(30) Priorität: 10.05.2004 DE 202004007631 U
(43) Veröffentlichungstag der Anmeldung: 16.11.2005
(73) Patentinhaber: AFRISO Euro-Index GmbH für Sicherungsarmaturen und Füllstandsmessung, 74363 Güglingen (DE)
(72) Erfinder: Ludwig, Manfred, 74363 Güglingen (DE); Heinz, Thomas, 74374 Zaberfeld (DE)
(74) Vertreter: Kohler Schmid Möbus

(56) Entgegenhaltungen:
- EP-A- 0 682 213
- EP-A- 0 964 153
- US-A- 4 328 827

## Beschreibung

Die vorliegende Erfindung betrifft eine Manometeranordnung mit einem manuellen Druckablassventil, dessen als Verschlussmutter ausgebildetes Ventilglied auf einen Gewindestutzen aufgeschraubt ist.

Die Dokumente EP 0 682 213 A, US 4 328 827 A und EP 0 964 153 A offenbaren bekannte Druckablassventile.

**Fig. 2** zeigt eine nicht vorveröffentlichte Manometeranordnung **101** gemäß dem Dokument DE 103 01 544 B3, deren Manometer **102** an einem Messstutzen **103** eines Kreuzstücks **104** vorgesehen ist. Das Kreuzstück 104 hat zwei einander gegenüber liegende Anschlussstutzen **105, 106,** auf die jeweils Schläuche **107, 108** aufgeschoben sind, sowie einen dem Messstutzen 103 gegenüber liegenden Gewindestutzen **109,** auf den eine Verschlussmutter **110** aufgeschraubt ist. Gewindestutzen 109 und Verschlussmutter 110 bilden zusammen ein manuelles Druckablassventil **111,** um den im Kreuzstück 104 bzw. in den Schläuchen 107, 108 herrschenden Druck, der am Manometer 102 angezeigt wird, manuell abzulassen.

Allerdings gibt es bei solchen Manometern in der Praxis Probleme mit unzulässig hohen (sicherheitsrelevanten) Überdrücken vor allem bei Temperaturen unterhalb des Gefrierpunktes. Hauptsächlich betroffen sind Reparatur-Sets für Pkw-Reifen, bei denen mittels eines Kompakt-Kompressors zunächst Latexmilch in den Autoreifen eingepresst und danach der Autoreifen mit Druckluft aufgepumpt wird. Der Reifendruck wird von Hand über das Druckablassventil einreguliert. Dabei kann es während des Einpressens der Latexmilch in den Autoreifen zu einem ungewollten Druckanstieg kommen, der zu einer Beschädigung des Manometers bzw. zum Platzen des Gefäßes mit der Latex-Milch führen kann. Die bei solchen Sets verwendeten Kompakt-Kompressoren sind ohne Druckregeleinrichtung bzw. - abschalteeinrichtung ausgestattet, so dass eine Überdrucksicherheit für das Manometer und das Gefäß mit der Latexmilch nicht vorhanden ist. Verursacht wird dieser Druckanstieg zum Beispiel durch die wesentlich höhere Zähflüssigkeit der Latexmilch bei Kälte. Genauso kann der erhöhte Druckanstieg bei Überalterung der Latexmilch, die bei Normaltemperatur zähflüssig ist, bereits bei Raumtemperatur erfolgen.

Demgegenüber ist es die Aufgabe der vorliegenden Erfindung, bei einer Manometeranordnung der eingangs genannten Art unzulässig hohe Überdrücke zu verhindern.

Diese Aufgabe wird erfindungsgemäß dadurch gelöst, dass in die Verschlussmutter ein Druckbegrenzungsventil integriert ist. Bevorzugt ist dabei das Druckbegrenzungsventil parallel zum Druckablassventil geschaltet.

Erfindungsgemäß ist das Druckbegrenzungsventil in ein bereits am Manometer befindliches manuelles Druckablassventil integriert. Dadurch werden zusätzliche Teile, Dichtstellen und der entsprechende Montageaufwand eingespart und ergibt sich eine kompakte, sichere und wirtschaftlich zu fertigende Bauform.

Bevorzugt ist das Druckbegrenzungsventil an dem dem Gewindestutzen abgewandten Ende der Verschlussmutter vorgesehen. Dabei weist die Verschlussmutter vorzugsweise eine konische Ventildichtfläche zum dichtenden Eingriff in die Öffnung des Gewindestutzens auf.

Bei einer vorteilhaften Ausführungsform mündet der Gewindestutzen in einen Ventilraum des Druckbegrenzungsventils. Bevorzugt öffnet sich der Ventilraum über einen Ventilsitz nach außen, mit dem ein im Federraum axial verschiebbar geführtes Ventilglied zusammenwirkt, welches durch eine Schließfeder gegen den Ventilsitz gedrückt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: die erfindungsgemäße Manometeranordnung in einem Teilschnitt; und

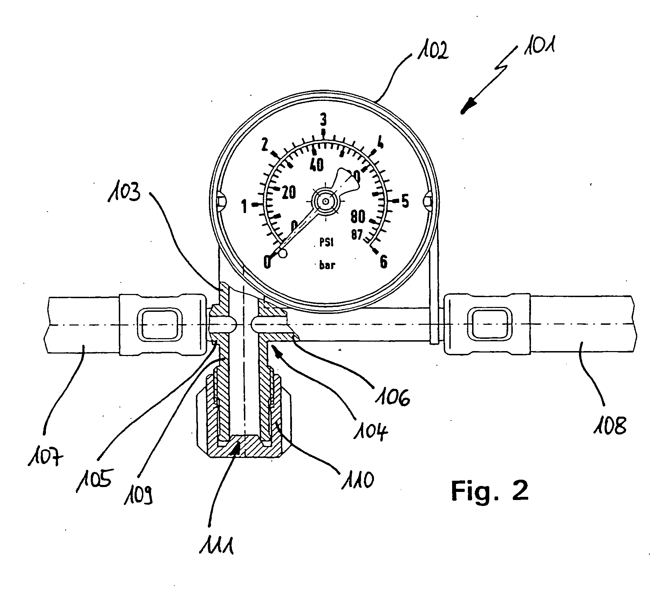

- Fig. 2: eine Manometeranordnung in einer Darstellung analog zu Fig. 1.

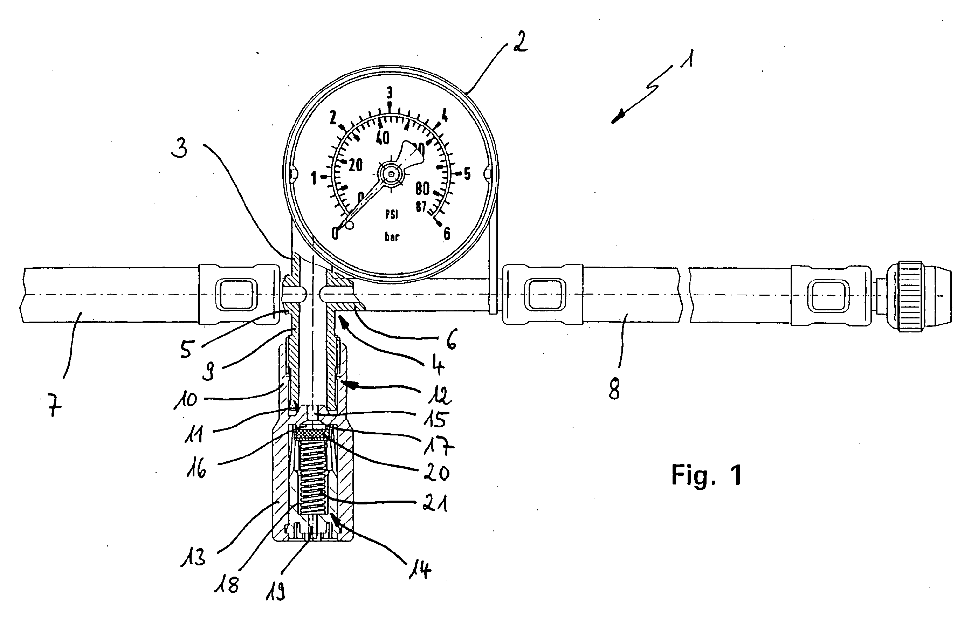

Fig. **1** zeigt die erfindungsgemäße Manometeranordnung **1,** deren Manometer **2** an einem Messstutzen **3** eines Kreuzstücks **4** vorgesehen ist. Das Kreuzstück 4 hat zwei einander gegenüber liegende Anschlussstutzen **5, 6,** auf die jeweils Schläuche **7, 8** aufgeschoben sind, sowie einen dem Messstutzen 3 gegenüber liegenden Gewindestutzen **9,** auf den eine Verschlussmutter **10** aufgeschraubt ist. Die Verschlussmutter 10 hat eine konische Ventildichtfläche **11,** die in die Öffnung des Gewindestutzens 9 dichtend eingreift. Gewindestutzen 9 und Verschlussmutter 10 bilden zusammen ein manuelles Druckablassventil **12,** um den im Kreuzstück 4 bzw. in den Schläuchen 7, 8 herrschenden Druck entsprechend der Anzeige am Manometer 2 manuell über die Gewindeverbindung zwischen Gewindestutzen 9 und Verschlussmutter 10 abzulassen.

An seinem dem Gewindestutzen 9 abgewandten Ende hat die Verschlussmutter 10 einen axialen hülsenförmigen Fortsatz **13,** in dem ein parallel zum Druckablassventil 11 geschaltetes Druckbegrenzungsventil **14** angeordnet ist. Über eine axiale Durchgangsbohrung **15,** um die herum die konische Ventildichtfläche 11 angeordnet ist, ist der Gewindestutzen 9 mit einem Ventilraum **16** des Druckbegrenzungsventils 14 verbunden. Der Ventilraum 16 ist über einen Ventilsitz **17** mit einem Federraum **18** verbunden, der sich über eine Bohrung **19** nach außen öffnet. Mit dem Ventilsitz 17 wirkt ein im Federraum 18 axial verschiebbar geführtes Ventilglied **20** zusammen, das durch eine Schließfeder **21** gegen den Ventilsitz 17 gedrückt wird. Wenn der im Ventilraum 16 herrschende Druck ausreicht, das Ventilglied 20 gegen die Wirkung der Schließfeder 21 zu öffnen, öffnet das Druckbegrenzungsventil 14, und der Druck kann über Federraum 16 und Bohrung 19 nach außen entweichen. Durch dieses integrierte Druckbegrenzungsventil 14 werden zusätzliche Teile, Dichtstellen und der entsprechende Montageaufwand eingespart und ergibt sich eine kompakte, sichere und wirtschaftlich zu fertigende Bauform.

## Patentansprüche

1. Manometeranordnung (1) mit einem Manometer (2) und einem manuellen Druckablassventil (12), dessen als Verschlussmutter (10) ausgebildetes Ventilglied auf einen Gewindestutzen (9) aufgeschraubt ist,
wobei
in die Verschlussmutter (10) ein Druckbegrenzungsventil (14) integriert ist.

2. Manometeranordnung nach Anspruch 1, wobei das Druckbegrenzungsventil (14) parallel zum Druckablassventil (12) geschaltet ist.

3. Manometeranordnung nach Anspruch 1 oder 2, wobei das Druckbegrenzungsventil (14) an dem dem Gewindestutzen (9) abgewandten Ende der Verschlussmutter (10) vorgesehen ist.

4. Manometeranordnung nach einem der vorhergehenden Ansprüche, wobei die Verschlussmutter (10) eine konische Ventildichtfläche (11) zum dichtenden Eingriff in die Öffnung des Gewindestutzens (9) aufweist.

5. Manometeranordnung nach einem der vorhergehenden Ansprüche, wobei der Gewindestutzen (9) in einen Ventilraum (16) des Druckbegrenzungsventils (14) mündet.

6. Manometeranordnung nach Anspruch 5, wobei sich der Ventilraum (16) über einen Ventilsitz (17) nach außen öffnet, mit dem ein axial verschiebbar geführtes Ventilglied (20) zusammenwirkt, welches durch eine Schließfeder (21) gegen den Ventilsitz (17) gedrückt wird.

## Claims

1. Manometer arrangement (1) comprising a manometer (2) and a manual pressure relief valve (12) having a valve member formed as a locking nut (10) and being screwed onto a threaded connection (9), wherein a pressure control valve (14) is integrated in the locking nut (10).

2. Manometer arrangement according to claim 1, wherein the pressure control valve (14) is connected parallel to the pressure relief valve (12).

3. Manometer arrangement according to claim 1 or 2, wherein the pressure control valve (14) is provided at the end of the locking nut (10) facing away from the threaded connection (9).

4. Manometer arrangement according to any one of the preceding claims, wherein the locking nut (10) comprises a conical valve sealing surface (11) for sealing engagement in the opening of the threaded connection (9).

5. Manometer arrangement according to any one of the preceding claims, wherein the threaded connection (9) terminates in a valve space (16) of the pressure control valve (14).

6. Manometer arrangement according to claim 5, wherein the valve space (16) opens to the outside via a valve seat (17) which cooperates with an axially displaceable valve member (20) that is pressed against the valve seat (17) by a closing spring (21).

## Revendications

1. Dispositif à manomètre (1) comprenant un manomètre (2) et une soupape d'évacuation manuelle de la pression (12) dont l'organe d'obturation proprement dit, qui est réalisé en tant qu'écrou de fermeture (10), est vissé sur une tubulure filetée (9), une soupape de limitation de la pression (14) étant intégrée dans l'écrou de fermeture (10).

2. Dispositif à manomètre selon la revendication 1, la soupape de limitation de la pression (14) étant montée en parallèle avec la soupape d'évacuation de la pression (12).

3. Dispositif à manomètre selon la revendication 1 ou 2, la soupape de limitation de la pression (14) étant prévue à l'extrémité de l'écrou de fermeture (10) qui est distante de la tubulure filetée (9).

4. Dispositif à manomètre selon l'une des revendications précédentes, l'écrou de fermeture (10) présentant une surface d'étanchéité conique (11) destinée à s'enfoncer dans l'ouverture de la tubulure filetée (9), afin de réaliser l'étanchéité.

5. Dispositif à manomètre selon l'une des revendications précédentes, la tubulure filetée (9) débouchant dans une chambre (16) de la soupape de limitation de la pression (14).

6. Dispositif à manomètre selon la revendication 5, la chambre (16) s'ouvrant sur l'extérieur via un siège de soupape (17) avec lequel coopère un organe d'obturation (20) guidé de manière à coulisser axialement, qui est appuyé par un ressort de fermeture (21) contre le siège de soupape (17).
